# EUROPÄISCHE PATENTSCHRIFT

(11) **EP 3 790 723 B1**
(45) Veröffentlichungstag und Bekanntmachung des Hinweises auf die Patenterteilung: **13.07.2022**
(21) Anmeldenummer: 19723390.1
(22) Anmeldetag: 09.05.2019
(51) Int. Cl.: B29C 49/42, B29C 49/78, B29C 49/06, B29C 49/36, B29L 31/00

(54) **VORRICHTUNG ZUM UMFORMEN VON KUNSTSTOFFVORFORMLINGEN ZU KUNSTSTOFFBEHÄLTNISSEN MIT ENTKOPPELTEN ANTRIEBEN**
APPARATUS FOR FORMING PLASTIC PARISONS INTO PLASTIC CONTAINERS, HAVING DECOUPLED DRIVES
DISPOSITIF DE FORMAGE DE PRÉFORMES EN MATIÈRE PLASTIQUE EN RÉCIPIENTS EN MATIÈRE PLASTIQUE POURVU D'ENTRAÎNEMENTS DÉCOUPLÉS

(30) Priorität: 09.05.2018 DE 102018111235
(43) Veröffentlichungstag der Anmeldung: 17.03.2021
(60) Teilanmeldung: 22175256.1
(73) Patentinhaber: Krones AG, 93073 Neutraubling (DE)
(72) Erfinder: HALLER, Markus, 93073 Neutraubling (DE); CHRISTIANSEN, Peter, 93073 Neutraubling (DE)
(74) Vertreter: Bittner, Bernhard
(86) Internationale Anmeldenummer: PCT/EP2019/061907
(87) Internationale Veröffentlichungsnummer: WO 2019/215277

(56) Entgegenhaltungen:
- US-A1- 2013 061 557
- US-A1- 2016 339 622
- US-A1- 2017 028 610
- US-B1- 6 386 857

## Beschreibung

Die vorliegende Erfindung bezieht sich auf eine Vorrichtung und ein Verfahren zum Umformen von Kunststoffvorformlingen zu Kunststoffbehältnissen. Derartige Vorrichtungen und Verfahren sind aus dem Stand der Technik seit Langem bekannt. Üblicherweise werden dabei Kunststoffvorformlinge zunächst in einer Erwärmungseinrichtung wie insbesondere aber nicht ausschließlich einem Infrarotofen erwärmt und anschließend in einer Umformungseinrichtung wie insbesondere einer Blasformeinrichtung zu den Kunststoffbehältnissen umgeformt.

Zu diesem Zweck werden Kunststoffvorformlinge üblicherweise zunächst ausgehend von einer losen Schüttung in einer Reihe transportiert und anschließend werden die Kunststoffvorformlinge vereinzelt der Erwärmungseinrichtung bzw. dem Ofen zugeführt. Um den Zufluss der Kunststoffvorformlinge in einer Zuführung zu der Erwärmungseinrichtung zu steuern, wird im Stand der Technik ein pneumatisch verfahrbarer Sperrbolzen (eine sogenannte Preformsperre) eingesetzt.

Um bei einer unsynchronen Übergabe der Kunststoffvorformlinge zwischen einer Zuführschiene und einem Einlaufsägezahnstern eine Verkeilung der Kunststoffvorformlinge zu verhindern, ist an dieser Stelle ein Teil der Zuführschiene beweglich senkrecht zur Materialflussrichtung verbaut.

Dieser bewegliche Teil wird durch einen Pneumatikzylinder in einer Produktionsposition bewegt. Bei einer auftretenden Verkeilung wird der bewegliche Teil entgegen der Kraft eines Pneumatikzylinders aus einer Produktionsposition bewegt. Diese Positionsänderung wird insbesondere durch Sensoren erkannt und daraufhin der bewegliche Teil durch eine Maschinensteuerung in eine andere Endlage gefahren, um die Verkeilung zu lösen.

Da hohe Anforderungen an die Verfahrdynamik der Preformsperre und den beweglichen Teil der Zuführschiene gestellt werden, sind dafür diverse Komponenten wie Pneumatikzylinderventile und digitale Ausgangsmodule erforderlich, welche auch entsprechende Eigenschaften aufweisen. Dies ist insgesamt mit entsprechend hohen Kosten verbunden. Außerdem ist die Parametrierung der Preformsperre für eine zuverlässige synchrone Übergabe der Kunststoffvorformlinge an einen Sägezahneinlaufstern nur eingeschränkt möglich. Die Parameter sind zudem abhängig von der Produktionsgeschwindigkeit und den Kunststoffvorformlingen.

Dokument US 2016/339622 A1 zeigt eine Vorrichtung 1 und ein Verfahren zum Erwärmen von Kunststoffvorformlingen 10 mit entkoppelten Transporteinrichtungen. Die Vorrichtung 1 weist dabei eine erste Transporteinrichtung 2 auf, welche die Kunststoffvorformlinge 10 vereinzelt transportiert und eine Vielzahl von Aufnahmemitteln 22 zur Aufnahme der Vorformlinge 10 aufweist sowie eine zweite Transporteinrichtung 4, welche die von der ersten Transporteinrichtung 2 transportierten Vorformlinge übernimmt und eine Vielzahl von Halteelementen 42 zum Halten der Vorformlinge 10 aufweist. Weiterhin ist eine Erwärmungseinrichtung 6 vorgesehen, welche die von der zweiten Transporteinrichtung 4 transportierten Vorformlinge 10 erwärmt. Eine Relativposition der Aufnahmemittel 22 der ersten Transporteinrichtung 2 ist dabei in der Umlaufrichtung der ersten Transporteinrichtung 2 gegenüber einer Position der Halteelementen bezüglich des Transportpfads P veränderbar. Die erste Transporteinrichtung 2 weist dabei eine erste Antriebseinrichtung 26 zum Antreiben der ersten Transporteinrichtung 2 auf und die zweite Transporteinrichtung 4 eine zweite Antriebseinrichtung 46 zum Antreiben der zweiten Transporteinrichtung 4, wobei die erste Antriebseinrichtung und die zweite Antriebseinrichtung unabhängig voneinander steuerbar sind.

Dokument US 6,386,857 B1 zeigt eine Rotations-Blasformmaschine 1 zur Herstellung von Kunststoffbehältnissen 56, umfassend einen Drehtisch 9, der von einer Motor Reduziereinheit angetrieben wird und eine Vielzahl von Blasformen 8 trägt, Getriebe- und Greifräder 4, 6 zum Greifen der Vorformlinge 55 aus einem Ofen 5, eine Antriebskette 16 zum Antreiben der Vorformlinge durch den Ofen 5 und veränderbare Sternelemente 7, 10 zum Zuführen der Vorformlinge 55 zu den Blasformen 8 und zum Herausnehmen der geformten Flaschen 56 aus den Blasformen, wobei ferner eine zentrale Steuereinheit zum unabhängigen Steuern der oben genannten Vorrichtungen vorgesehen ist.

Der vorliegenden Erfindung liegt daher die Aufgabe zugrunde, derartige Vorrichtungen insbesondere flexibler bei Ausfällen zu gestalten. Diese Aufgaben werden erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen weist eine Transporteinrichtung auf, welche die Kunststoffvorformlinge entlang eines vorgegebenen Transportpfads transportiert, wobei diese Transportvorrichtung eine Vielzahl von sich bevorzugt aneinander anschließenden Transporteinrichtungen zum Transportieren der Kunststoffvorformlinge aufweist.

Weiterhin weist die Vorrichtung eine Umformungseinrichtung auf, welche entlang des Transportpfads der Kunststoffvorformlinge nach der Erwärmungseinrichtung angeordnet ist, wobei die Vorrichtung eine erste Transporteinrichtung aufweist, welche der Erwärmungseinrichtung die Kunststoffvorformlinge vereinzelt zuführt und wobei die Erwärmungseinrichtung eine zweite Transporteinrichtung aufweist, welche die Kunststoffvorformlinge während deren Erwärmung transportiert.

Erfindungsgemäß weist die erste Transporteinrichtung eine erste Antriebseinrichtung auf und die zweite Transporteinrichtung weist eine zweite Antriebseinrichtung auf und die erste und die zweite Antriebseinrichtung sind unabhängig voneinander steuerbar.

Es wird daher im Rahmen der Erfindung vorgeschlagen, dass die Antriebseinrichtungen der Zuführeinrichtung, wie beispielsweise eines Sägezahnsterns, sowie die Antriebseinrichtung des eigentlichen Ofens unabhängig voneinander steuerbar sind. So ist es beispielsweise möglich, dass ein Einlaufsägezahnstern mit einem eigenen Servoantrieb bzw. einer eigenen Antriebseinrichtung bewegt wird.

Im internen Stand der Technik der Anmelderin ist es bekannt, dass eine Verfahrbewegung so ausgeführt wird, dass stets eine zur Heizkette synchrone Positionierung stattfindet. Dies bedeutet, dass die Zuführeinrichtungen und die Erwärmungseinrichtung stets aufeinander synchronisiert sind.

Die Erfindung schlägt demgegenüber vor, dass unabhängige Antriebe vorgesehen sind und diese auch bevorzugt zeitweise voneinander entkoppelt sind. So ist es im Rahmen der Erfindung möglich, den Antrieb, insbesondere den Antrieb der Zuführeinrichtung, d.h. etwa des Sägezahnsterns nur dann zu bewegen, wenn eine Übergabe der Kunststoffvorformlinge erfolgen muss. Auf diese Weise kann die oben beschriebene Preformsperre entfallen. Da der Strom der Kunststoffvorformlinge nicht mehr unterbrochen wird, kann auch das bewegliche Teil der Zuführschiene starr ausgeführt werden.

Auch die bislang notwendigen Komponenten zu deren Ansteuerung können entfallen.

Auf diese Weise können die Materialkosten reduziert werden. Daneben ist auch ein zuverlässigerer Betrieb möglich (der Maschinenwirkungsgrad wird erhöht). Auch ist keine Parametrierung mehr notwendig, sodass auch eine Reduktion der Personalkosten ermöglicht ist. Bei einer weiteren vorteilhaften Ausführungsform weist die zweite Transporteinrichtung ein umlaufendes Transportmittel auf. Hierbei kann es sich beispielsweise um einen drehbaren Träger handeln, besonders bevorzugt handelt es sich jedoch bei dem umlaufenden Transportmittel um eine Transportkette. An dieser Transportkette kann eine Vielzahl von Halteelementen angeordnet sein, welche dazu geeignet und bestimmt sind, die Kunststoffvorformlinge zu transportieren. Besonders bevorzugt kann es sich hierbei um Haltedorne handeln, welche in die Mündungen der Kunststoffvorformlinge eingreifen.

Bevorzugt weist die Erwärmungseinrichtung auch Dreheinrichtungen auf, welche dazu dienen, die Kunststoffvorformlinge während ihrer Erwärmung um ihre Längsrichtung zu drehen. Daneben können auch Vorrichtungen vorgesehen sein, welche eine Bewegung der Halteelemente senkrecht zur Transportrichtung und insbesondere in einer Längsrichtung der Kunststoffvorformlinge ermöglichen.

Besonders bevorzugt weist der Transportpfad der zweiten Transporteinrichtung unterschiedlich gekrümmte Abschnitte auf. So kann der Transportpfad gerade Abschnitte aufweisen und zwischen diesen geraden Abschnitten beispielsweise gekrümmte Abschnitte, in denen eine Bewegungsrichtung der Kunststoffvorformlinge um einen vorgegebenen Winkel, etwa um 180° umgelenkt wird.

Bei einer weiteren vorteilhaften Ausführungsform weisen die Antriebseinrichtungen Motoren, insbesondere Elektromotoren und insbesondere Servomotoren auf.

Bei einer weiteren vorteilhaften Ausführungsform handelt es sich bei der Umformungseinrichtung um eine Blasformmaschine, welche die Kunststoffvorformlinge durch Beaufschlagung mit einem gasförmigen Medium zu den Kunststoffbehältnissen umformt. Es kann jedoch auch eine Umformungseinrichtung vorgesehen sein, welche die Kunststoffvorformlinge mit einem flüssigen Produkt und insbesondere mit einem abzufüllenden Medium expandiert bzw. umformt.

Bei einer weiteren vorteilhaften Ausführungsform handelt es sich bei der vierten Transporteinrichtung, welche der Umformungseinrichtung zugeordnet ist, um ein sogenanntes Blasrad. Vorteilhaft ist wenigstens eine Umformungsstation und besonders bevorzugt ist eine Vielzahl von Umformungsstationen an diesem Blasrad angeordnet. Dabei weisen besonders bevorzugt diese Umformungsstationen jeweils Blasformeinrichtungen auf, wobei diese Blasformeinrichtungen besonders bevorzugt Seitenteile aufweisen, die bezüglich einander schwenkbar sind, um Kunststoffvorformlinge aufzunehmen und in ihrem Inneren zu den Kunststoffbehältnissen und insbesondere Kunststoffflaschen zu expandieren. Daneben weisen die Blasformeinrichtungen bevorzugt auch Bodenteile auf, welche den Hohlraum zur Aufnahme der Kunststoffvorformlinge begrenzen.

Bei einer weiteren vorteilhaften Ausführungsform weisen die Umformungsstationen auch jeweils stangenartige Körper, insbesondere sogenannte Reckstangen auf, die in das Innere der Kunststoffvorformlinge einführbar sind, um diese in deren Längsrichtung zu dehnen.

Bei einer weiteren vorteilhaften Ausführungsform weist die Vorrichtung eine Steuerungseinrichtung auf, welche dazu geeignet und bestimmt ist, die einzelnen Transporteinrichtungen zu steuern.

Bei einer weiteren vorteilhaften Ausführungsform weist die Vorrichtung wenigstens eine Sensoreinrichtung auf, welche dazu geeignet und bestimmt ist, Fehler im Transport der Kunststoffvorformlinge zu erfassen. So kann beispielsweise ein Verkeilen von Kunststoffvorformlingen oder Ähnliches erfasst werden. Bevorzugt kann in Reaktion auf einen derartigen Fehler der ersten Transporteinrichtung deren Antrieb verlangsamt oder auch abgeschalten werden.

Bei einer weiteren vorteilhaften Ausführungsform ist die erste Transporteinrichtung als Vereinzelungseinrichtung ausgebildet, welche aufeinander folgende Kunststoffvorformlinge vereinzelt. Besonders bevorzugt weist diese Vereinzelungseinrichtung einen Sägezahnstern auf, wobei dieser besonders bevorzugt eine Vielzahl von Ausnehmungen am Außenumfang aufweist, von welchen die Kunststoffvorformlinge und insbesondere deren Hälse aufgenommen werden können.

Bevorzugt dient daher dieser Sägezahnstern dazu, aus einem ankommenden Strom von Kunststoffvorformlingen jeweils einzelne abzugreifen und diese so zu vereinzeln.

In einigen Fällen ist es auch erforderlich bzw. vorteilhaft, dass mit einer Umformungseinrichtung besonders niedrige Produktionsleistungen gefahren werden. Dies ist beispielsweise denkbar, wenn eine Umformungseinrichtung wenige Blasformen aufweist oder auch eine geringe Leistungsbandbreite einer nachfolgenden Abfüllmaschine vorliegt. Daneben kann es auch gewünscht sein, einen sogenannten Labormaschinenbetrieb einzurichten (z.B. auch bei einer Pilotformenabmusterung). In diesem Falle sind im Stand der Technik hierfür spezielle Einlaufgarnituren für Kunststoffvorformlinge vorgesehen, z.B. Garnituren, welche zur Produktion auf jeder zweiten Blasstation dienen.

Daneben ist es auch bekannt, dass eine Preform-Einlaufsperrfinger getaktet arbeitet. Daneben besteht eine aus dem internen Stand der Technik bekannte Möglichkeit der Anmelderin darin, die Kunststoffvorformlinge vor einem Blasprozess einfach unproduziert auszuleiten.

Diese Vorgehensweisen aus dem Stand der Technik sind mit Nachteilen im Heizofen bzw. der Erwärmungseinrichtung der Blasmaschine behaftet. Wird nur jeder zweite Kunststoffvorformling in die Maschine geführt, entstehen große Lücken. Durch diese großen Lücken (größere Zwischenräume der Kunststoffvorformlinge im Ofen) entsteht ein wesentlich höherer Stromverbrauch und dies kann auch zu größeren thermischen Belastungen oberhalb der Heizkammer führen (z.B. bei den nicht belegten Heizdornen).

Dadurch dass, wie oben erwähnt, besonders bevorzugt mehrere bzw. alle Transporteinrichtungen bzw. deren Antriebe unabhängig voneinander steuerbar sind und besonders bevorzugt eine Servoantriebstechnologie in der Umformungseinrichtung vorgesehen ist, kann erreicht werden, dass (insbesondere bei geraden Teilungen) mit Hilfe eines ausgewählten Bedienbildschirmprogramms (welches besonders bevorzugt in einem Bedienbildschirm einer Blasmaschine anwählbar ist) die Leistung aller dem Blasrad vorgeschalteten Funktionsräder so angepasst wird, dass man lückenlos Preforms der Maschine und insbesondere der Umformungseinrichtung zuführt. Bevorzugt können sämtliche Einstellungen der Funktionsräder zueinander in dem Bedienbildschirmprogramm als Maschinenrezepte bzw. Produktionsrezepte abgespeichert werden.

Auf diese Weise wird hier die Leistung insoweit reduziert, als nur noch z.B. jede zweite Umformungsstation oder nur eine einzige Umformungsstation mit Kunststoffvorformlingen beschickt wird.

Dies bietet wiederum den Vorteil, dass auf Knopfdruck eine sehr hohe Flexibilität hergestellt werden kann. Selbst wenn etwa ein Benutzer nur eine Kleinserie produzieren möchte (weil er beispielsweise nur eine Blasform besitzt) kann er dies ohne einen erhöhten Energieverbrauch über längere Zeit tun. Es kommt nicht zu einer thermischen Überbelastung der Bereiche über dem Heizkanal und man benötigt keine speziellen Garniturenteile.

Bei einem ständigen getaktet arbeitenden Einlauffinger für Kunststoffvorformlinge bestand außerdem eine erhöhte Störanfälligkeit bzw. eine deutlich reduzierte Lebensdauer.

Im Extremfall könnte auch nur eine Einzelmaschine bzw. Labormaschine Einsatz finden. Daneben wäre es auch möglich, diese Erfindung an den bekannten Rundläufermaschinen als Produktionsmaschinen anzuwenden.

Auf diese Weise kann insbesondere der Vorteil einer Servoantriebstechnologie besser genutzt werden.

Bei einer weiteren vorteilhaften Ausführungsform ist die erste Transporteinrichtung gegenüber der zweiten Transporteinrichtung mit einer veränderten und insbesondere verlangsamten Transportgeschwindigkeit antreibbar. Auch wäre es, wie oben erwähnt, möglich, die erste Transporteinrichtung zeitweise anzuhalten, während die zweite Transporteinrichtung, welche die Kunststoffvorformlinge durch den Ofen transportiert, weiterläuft.

Bei einer weiteren vorteilhaften Ausführungsform ist daher die erste Transporteinrichtung bei einem fortgesetzten Betrieb der zweiten Transporteinrichtung anhaltbar. Auf diese Weise gelangen keine Kunststoffvorformlinge mehr zur zweiten Transporteinrichtung und insbesondere zu dem Ofen. Besonders bevorzugt ist die erste Transporteinrichtung maximal mit einer Geschwindigkeit betreibbar, mit der sie auf die zweite Transporteinrichtung synchronisiert ist.

Besonders bevorzugt wirkt die erste Transporteinrichtung als Transportsperre, besonders bevorzugt ist keine weitere Preformsperre wie oben beschrieben erforderlich.

Bei einer weiteren vorteilhaften Ausführungsform weist die Vorrichtung eine Zuführeinrichtung auf, welche der ersten Transporteinrichtung die Kunststoffvorformlinge, insbesondere als Produktstrom, zuführt. Besonders bevorzugt werden hier die Kunststoffvorformlinge zunächst aneinander anliegend transportiert und berühren sich gegenseitig. Die Vereinzelungseinrichtung vereinzelt diesen Produktstrom wie oben erwähnt. Besonders bevorzugt weist die Vorrichtung eine Sortiereinrichtung auf, die beispielsweise ausgehend von einer Preformschütte bzw. einer losen Schüttung die Kunststoffvorformlinge sortiert und insbesondere ausrichtet.

Bei einer weiteren vorteilhaften Ausführungsform weist die Vorrichtung Zuführschienen auf, welche die Kunststoffvorformlinge der ersten Transporteinrichtung zuführen. Besonders bevorzugt sind diese Zuführschienen starr ausgeführt und in einer exakten Position gegenüber der ersten Transporteinrichtung.

Bei einer weiteren vorteilhaften Ausführungsform weist die Erwärmungseinrichtung wenigstens eine und bevorzugt eine Vielzahl von Erwärmungseinrichtungen auf, welche entlang des Transportpfads der Kunststoffvorformlinge angeordnet sind. Hierbei kann es sich beispielsweise um Heizelemente bzw. Heizkästen handeln, die insbesondere seitlich neben dem Transportpfad der Kunststoffvorformlinge angeordnet sind. Insbesondere handelt es sich bei den Erwärmungseinrichtungen um stationär angeordnete Erwärmungseinrichtungen. Besonders bevorzugt handelt es sich bei den Erwärmungseinrichtungen um Infraroterwärmungseinrichtungen. Es wäre jedoch auch möglich, dass es sich bei der Erwärmungseinrichtung um einen Mikrowellenofen handelt.

Bei einer weiteren vorteilhaften Ausführungsform weist die Vorrichtung auch eine Kühleinrichtung auf, welche dazu geeignet und bestimmt ist, die Kunststoffvorformlinge zu kühlen.

Besonders bevorzugt weist die Erwärmungseinrichtung einen Kanal auf, durch den die Kunststoffvorformlinge transportiert werden.

Bei einer weiteren vorteilhaften Ausführungsform weist die Transportvorrichtung eine dritte Transporteinrichtung auf, welche dazu geeignet und bestimmt ist, die Kunststoffvorformlinge von der Erwärmungseinrichtung zu der Umformungseinrichtung zu transportieren. Bei dieser dritten Transporteinrichtung kann es sich beispielsweise um einen Transportstern handeln. Es wäre sogar möglich, dass mehrere Transporteinrichtungen vorgesehen sind, welche die Kunststoffvorformlinge von der Erwärmungseinrichtung zu der Umformungseinrichtung fördern. Bei einer weiteren bevorzugten Ausführungsform können zwischen der Erwärmungseinrichtung und der Umformungseinrichtung auch Sterilisationselemente bzw. Sterilisationsaggregate vorgesehen sein, welche die Kunststoffvorformlinge sterilisieren.

Bei einer weiteren vorteilhaften Ausführungsform weist die dritte Transporteinrichtung eine Antriebseinrichtung auf, und diese Antriebseinrichtung ist insbesondere unabhängig von der Antriebseinrichtung der zweiten Transporteinrichtung und/oder der Antriebseinrichtung der ersten Transporteinrichtung steuerbar.

Bei einer weiteren bevorzugten Ausführungsform sind sämtliche Transporteinrichtungen unabhängig voneinander steuerbar. Auf diese Weise wird ein besonders hohes Maß an Flexibilität erreicht.

Die vorliegende Erfindung ist weiterhin auf ein Verfahren zum Umformen von Kunststoffvorformlingen zu Kunststoffbehältnissen gerichtet, wobei die Kunststoffvorformlinge mit einer Transporteinrichtung entlang eines vorgegebenen Transportpfads transportiert werden und wobei diese Transportvorrichtung eine Vielzahl von Transporteinrichtungen (welche sich bevorzugt aneinander anschließen) zum Transportieren der Kunststoffvorformlinge aufweist.

Weiterhin ist eine Erwärmungseinrichtung vorgesehen, welche die Kunststoffvorformlinge erwärmt, und eine Umformungseinrichtung, welche entlang des Transportpfads der Kunststoffvorformlinge nach der Erwärmungseinrichtung angeordnet ist und welche die Kunststoffvorformlinge durch Beaufschlagung mit einem fließfähigen Medium zu den Kunststoffbehältnissen umformt. Weiterhin weist die Vorrichtung eine erste Transporteinrichtung auf, welche der Erwärmungseinrichtung die Kunststoffvorformlinge vereinzelt zuführt, wobei die Erwärmungseinrichtung eine zweite Transporteinrichtung aufweist, welche die Kunststoffvorformlinge während deren Erwärmung transportiert.

Erfindungsgemäß weist die erste Transporteinrichtung eine erste Antriebseinrichtung auf und die zweite Transporteinrichtung eine zweite Antriebseinrichtung und die erste Antriebseinrichtung und die zweite Antriebseinrichtung werden wenigstens zeitweise unabhängig voneinander gesteuert.

Weitere Vorteile und Ausführungsformen ergeben sich aus der beigefügten Zeichnung.

Darin zeigt:

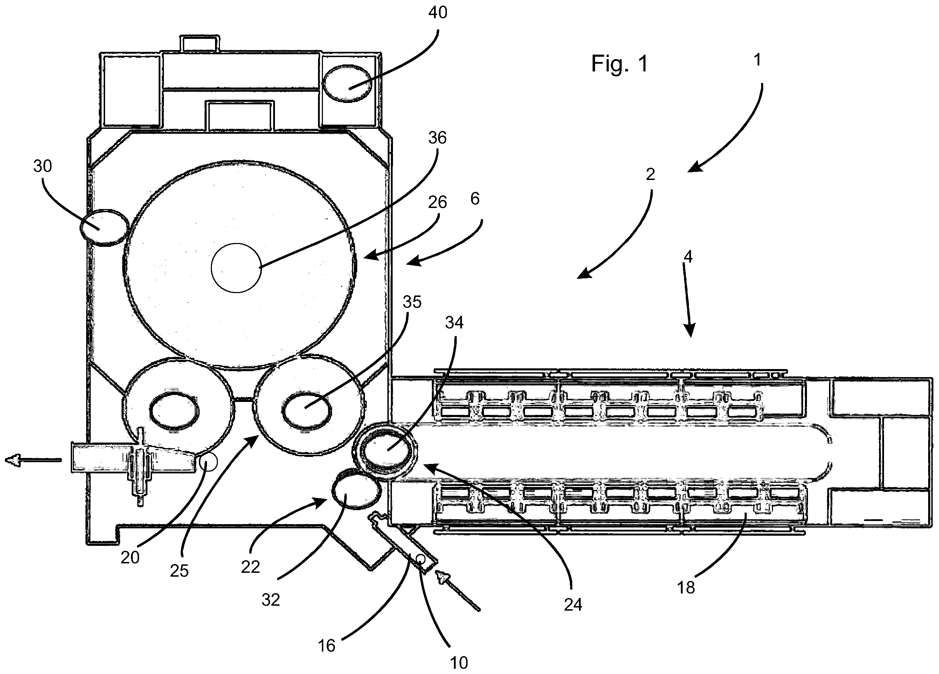

- Fig. 1: Eine schematische Darstellung einer erfindungsgemäßen Vorrichtung zum Umformen von Kunststoffvorformlingen zu Kunststoffbehältnissen.

Figur 1 zeigt eine Vorrichtung 1 zum Umformen von Kunststoffvorformlingen 10 zu Kunststoffbehältnissen 20. Diese Vorrichtung weist grob eine Heizeinrichtung bzw. Erwärmungseinrichtung 4 auf, welche zum Erwärmen der Kunststoffvorformlinge dient. An diese Erwärmungseinrichtung schließt sich die eigentliche Umformungseinrichtung 6 an. Diese Umformungseinrichtung weist einen drehbaren Träger 36 auf, an dem eine Vielzahl von Umformungsstationen 30 (nur eine dargestellt) angeordnet ist.

Die Kunststoffvorformlinge 10 werden über Zuführschienen 16 zunächst einer ersten Transporteinrichtung 22 zugeführt. Diese Transporteinrichtung 22 weist einen eigenen Antrieb 32 auf. Diese erste Transporteinrichtung 22 ist hier als Transportstern bzw. Sägezahnstern ausgeführt, der auch zum Vereinzeln der Kunststoffvorformlinge dient.

Ausgehend von dieser ersten Transporteinrichtung 22 werden die Kunststoffvorformlinge 10 einer zweiten Transporteinrichtung 24, welche die Kunststoffvorformlinge durch die Erwärmungseinrichtung 4 führt, transportiert. Diese zweite Transporteinrichtung 24 weist wiederum eine eigene Antriebseinrichtung 34 auf, welche insbesondere auch unabhängig steuerbar ist von der Antriebseinrichtung 32.

Das Bezugszeichen 18 kennzeichnet eine Heizeinrichtung, welche hier seitlich neben dem Transportpfad der Kunststoffvorformlinge angeordnet ist.

An die Erwärmungseinrichtung 4 schließt sich eine dritte Transporteinrichtung 25 mit einer Antriebseinrichtung 35 an. Hierbei kann es sich beispielsweise um einen Transportstern oder ein Transportrad handeln, welches die Kunststoffvorformlinge zu der Umformungseinrichtung 6 transportiert.

Das Bezugszeichen 26 kennzeichnet damit die vierte Transporteinrichtung, welche die Umformungsstationen 30 und damit auch die in diesen Umformungsstationen angeordneten Kunststoffvorformlinge transportiert. Das Bezugszeichen 36 kennzeichnet grob einen Antrieb für diese Transporteinrichtung 26.

Bevorzugt sind daher alle Transporteinrichtungen jeweils über Servomotoren angetrieben.

Das Bezugszeichen 40 kennzeichnet eine Steuerungseinrichtung zum Steuern der gesamten Anlage. Dabei ist jedoch bevorzugt auch eine individuelle Steuerung der einzelnen Antriebe der Transporteinrichtungen vorgesehen.

### Bezugszeichenliste

- 1: Vorrichtung
- 4: Heizeinrichtung bzw. Erwärmungseinrichtung
- 6: Umformungseinrichtung
- 10: Kunststoffvorformlinge
- 16: Zuführschienen
- 18: Heizeinrichtung
- 20: Kunststoffbehältnisse
- 22: Transporteinrichtung
- 24: zweite Transporteinrichtung
- 25: dritte Transporteinrichtung
- 26: vierte Transporteinrichtung
- 30: Umformungsstationen
- 32: Antrieb
- 34: Antriebseinrichtung der zweiten Transporteinrichtung
- 35: Antriebseinrichtung der dritten Transporteinrichtung
- 36: drehbarer Träger
- 36: Antrieb der vierten Transporteinrichtung
- 40: Steuerungseinrichtung

## Patentansprüche

1. Vorrichtung (1) zum Umformen von Kunststoffvorformlingen (10) zu Kunststoffbehältnissen (20) mit einer Transportvorrichtung (2), welche die Kunststoffvorformlinge (10) entlang eines vorgegebenen Transportpfads transportiert, wobei diese Transportvorrichtung (2) eine Vielzahl von sich bevorzugt einander anschließenden Transporteinrichtungen (22, 24, 25, 26) zum Transportieren der Kunststoffvorformlinge aufweist, mit einer Erwärmungseinrichtung (4), welche die Kunststoffvorformlinge (10) erwärmt und mit einer Umformungseinrichtung (6), welche entlang des Transportpfads der Kunststoffvorformlinge (10) nach der Erwärmungseinrichtung (2) angeordnet ist, wobei die Vorrichtung (1) eine erste Transporteinrichtung (22) aufweist, welche der Erwärmungseinrichtung die Kunststoffvorformlinge vereinzelt zuführt, wobei die Erwärmungseinrichtung (4) eine zweite Transporteinrichtung (24) aufweist, welche die Kunststoffvorformlinge während deren Erwärmung transportiert,
**dadurch gekennzeichnet, dass**
die erste Transporteinrichtung (22) eine erste Antriebseinrichtung (32) aufweist und die zweite Transporteinrichtung (24) eine zweite Antriebseinrichtung (34) aufweist und die erste Antriebseinrichtung (32) und die zweite Antriebseinrichtung (34) unabhängig voneinander steuerbar sind, wobei
die erste Transporteinrichtung (22) gegenüber der zweiten Transporteinrichtung (24) mit einer veränderten und insbesondere verlangsamten Transportgeschwindigkeit antreibbar ist und die erste Transporteinrichtung bei fortgesetztem Betrieb der zweiten Transporteinrichtung (24) anhaltbar ist.

2. Vorrichtung (1) nach Anspruch 1,
**dadurch gekennzeichnet, dass**
die erste Transporteinrichtung als Vereinzelungseinrichtung (22) ausgebildet ist, welche aufeinanderfolgende Kunststoffvorformlinge (10) vereinzelt.

3. Vorrichtung (1) nach wenigstens einem der vorangegangenen Ansprüche,
**dadurch gekennzeichnet, dass**
die Vorrichtung (1) eine Zuführeinrichtung aufweist, welche der ersten Transporteinrichtung (22) die Kunststoffvorformlinge, insbesondere als Produktstrom, zuführt.

4. Vorrichtung (1) nach wenigstens einem der vorangegangenen Ansprüche,
**dadurch gekennzeichnet, dass**
die Erwärmungseinrichtung (4) wenigstens eine und bevorzugt eine Vielzahl von Erwärmungseinrichtungen aufweist, welche entlang des Transportpfads der Kunststoffvorformlinge angeordnet sind.

5. Vorrichtung (1) nach wenigstens einem der vorangegangenen Ansprüche,
**dadurch gekennzeichnet, dass**
die Transportvorrichtung (2) eine dritte Transporteinrichtung (25) aufweist, welche dazu geeignet und bestimmt ist, die Kunststoffvorformlinge von der Erwärmungseinrichtung (4) zu der Umformungseinrichtung (6) zu transportieren.

6. Vorrichtung (1) nach dem vorangegangenen Anspruch,
**dadurch gekennzeichnet, dass**
die dritte Transporteinrichtung (25) eine Antriebseinrichtung (35) aufweist und diese Antriebseinrichtung unabhängig von insbesondere der Antriebseinrichtung der ersten Transporteinrichtung und/oder der Antriebseinrichtung der zweiten Transporteinrichtung steuerbar ist.

7. Vorrichtung (1) nach wenigstens einem der vorangegangenen Ansprüche,
**dadurch gekennzeichnet, dass**
sämtliche Transporteinrichtungen (22, 24, 25, 26) unabhängig voneinander steuerbar sind.

8. Verfahren zum Umformen von Kunststoffvorformlingen (10) zu Kunststoffbehältnissen (20) wobei die Kunststoffvorformlinge mit einer Transportvorrichtung (2) entlang eines vorgegebenen Transportpfads transportiert werden, wobei diese Transportvorrichtung (2) eine Vielzahl von sich bevorzugt einander anschließenden Transporteinrichtungen (22, 24, 25, 26) zum Transportieren der Kunsttoffvorformlinge aufweist wobei eine Erwärmungseinrichtung (4) die Kunststoffvorformlinge (10) erwärmt und eine Umformungseinrichtung (6) welche entlang des Transportpfads der Kunststoffvorformlinge (10) nach der Erwärmungseinrichtung (4) angeordnet ist die Kunststoffvorformlinge (10) durch Beaufschlagung mit einem fließfähigen Medium zu den Kunststoffbehältnissen (20) umformt, wobei die Vorrichtung (1) eine erste Transporteinrichtung (22) aufweist, welche der Erwärmungseinrichtung (4) die Kunststoffvorformlinge (10) vereinzelt zuführt, wobei die Erwärmungseinrichtung (4) eine zweite Transporteinrichtung (24) aufweist, welche die Kunststoffvorformlinge (10) während deren Erwärmung transportiert,
**dadurch gekennzeichnet, dass**
die erste Transporteinrichtung (22) eine erste Antriebseinrichtung (32) aufweist und die zweite Transporteinrichtung (24) eine zweite Antriebseinrichtung (34) aufweist und die erste Antriebseinrichtung (32) und die zweite Antriebseinrichtung (34) wenigstens zeitweise unabhängig voneinander gesteuert werden, wobei
die erste Transporteinrichtung (22) gegenüber der zweiten Transporteinrichtung (24) mit einer veränderten und insbesondere verlangsamten Transportgeschwindigkeit antreibbar ist und die erste Transporteinrichtung bei fortgesetztem Betrieb der zweiten Transporteinrichtung (24) anhaltbar ist.

## Claims

1. Apparatus (1) for forming plastic material preforms (10) into plastic material containers (20) with a transport device (2), which transports the plastic material preforms (10) along a predetermined transport path, wherein this transport device(2) comprises a plurality of transport devices (22, 23, 24, 25, 26) preferably adjoining one another for transporting the plastic material preforms, with a heating device (4) which heats the plastic material preforms (10) and with a forming device (6) which is arranged along the transport path of the plastic material preforms (10) after the heating device (2), wherein the apparatus (1) comprises a first transport device (22) which feeds the plastic material preforms individually to the heating device, wherein the heating device (4) comprises a second transport device (24) which transports the plastic material preforms during their heating,
**characterised in that**
the first transport device (22) comprises a first drive device (32) and the second transport device (24) comprises a second drive device (34) and the first drive device (32) and the second drive device (34) are controllable independently of each other, wherein
the first transport device (22) can be driven at a different and in particular a slower transport speed with respect to the second transport device (24) and the first transport device can be stopped while the second transport device (24) is in continued operation.

2. Apparatus (1) according to claim 1,
**characterised in that**
the first transport device is designed as a separating device (22) which separates successive plastic preforms (10).

3. Apparatus (1) according to at least one of the preceding claims, **characterised in that**
the apparatus (1) has a feed device which feeds the plastic material preforms, in particular as a product stream, to the first transport device (22).

4. Apparatus (1) according to at least one of the preceding claims, **characterised in that**
the heating device (4) comprises at least one and preferably a plurality of heating devices which are arranged along the transport path of the plastic material preforms.

5. Apparatus (1) according to at least one of the preceding claims, **characterised in that**
the transport device (2) has a third transport device (25) which is suitable and intended to transport the plastic material preforms from the heating device (4) to the forming device (6).

6. Apparatus (1) according to the preceding claim,
**characterised in that**
the third transport device (25) has a drive device (35) and this drive device is controllable independently of, in particular, the drive device of the first transport device and/or the drive device of the second transport device.

7. Apparatus (1) according to at least one of the preceding claims, **characterised in that**
all transport devices (22, 24, 25, 26) can be controlled independently of one another.

8. Method for forming plastic material preforms (10) into plastic material containers (20), wherein the plastic material preforms are transported with a transport device (2) along a predetermined transport path, wherein this transport device (2) comprises a plurality of transport devices (22, 24, 25, 26) which preferably adjoin one another for transporting the plastic material preforms, wherein a heating device (4) heats the plastic material preforms (10) and a forming device (6) which is arranged along the transport path of the plastic material preforms (10) after the heating device (4) forms the plastic material preforms (10) into the plastic material containers (20) by acting upon a flowable medium, wherein the apparatus (1) has a first transport device (22) which feeds the plastic material preforms (10) individually to the heating device (4), wherein the heating device (4) has a second transport device (24) which transports the plastic material preforms during their heating,
**characterised in that**
the first transport device (22) has a first drive device (32) and the second transport device (24) has a second drive device (34), and the first drive device (32) and the second drive device (34) are controlled independently of each other at least at times, wherein
the first transport device (22) can be driven at a different and in particular a slower transport speed with respect to the second transport device (24) and the first transport device can be stopped while the second transport device (24) is in continued operation.

## Revendications

1. Dispositif (1) destiné à façonner des préformes en plastique (10) pour en faire des contenants en plastique (20) avec un dispositif de transport (2), lequel transporte les préformes en plastique (10) le long d'un chemin de transport prédéfini, dans lequel ce dispositif de transport (2) présente une pluralité d'équipements de transport (22, 24, 25, 26) se raccordant de préférence les uns aux autres pour le transport des préformes en plastique, avec un équipement de réchauffement (4), lequel réchauffe les préformes en plastique (10) et avec un équipement de façonnage (6), lequel est agencé le long du chemin de transport des préformes en plastique (10) et après l'équipement de réchauffement (4), dans lequel le dispositif (1) présente un premier équipement de transport (22), lequel amène les préformes en plastique individuellement à l'équipement de réchauffement, dans lequel l'équipement de réchauffement (4) présente un deuxième équipement de transport (24), lequel transporte les préformes en plastique pendant leur réchauffement,
**caractérisé en ce que**
le premier équipement de transport (22) présente un premier équipement d'entraînement (32) et le deuxième équipement de transport (24) présente un second équipement d'entraînement (34), et le premier équipement d'entraînement (32) et le second équipement d'entraînement (34) peuvent être commandés indépendamment l'un de l'autre, dans lequel
le premier équipement de transport (22) peut être entraîné à une vitesse de transport modifiée, et en particulier ralentie, par rapport au deuxième équipement de transport (24), et le premier équipement de transport peut être arrêté lorsque le fonctionnement se poursuit avec le deuxième équipement de transport (24).

2. Dispositif (1) selon la revendication 1,
**caractérisé en ce que**
le premier équipement de transport est conçu en tant qu'équipement d'individualisation (22), lequel individualise des préformes en plastique (10) qui se succèdent.

3. Dispositif (1) selon au moins l'une des revendications précédentes, **caractérisé en ce que**
le dispositif (1) présente un équipement d'amenée, lequel amène les préformes en plastique au premier équipement de transport (22), en particulier en tant que flux de produits.

4. Dispositif (1) selon au moins l'une des revendications précédentes, **caractérisé en ce que**
l'équipement de réchauffement (4) présente au moins un et de préférence une pluralité d'équipements de réchauffement, lesquels sont agencés le long du chemin de transport des préformes en plastique.

5. Dispositif (1) selon au moins l'une des revendications précédentes, **caractérisé en ce que**
le dispositif de transport (2) présente un troisième équipement de transport (25), lequel est adapté et déterminé pour transporter les préformes en plastique depuis l'équipement de réchauffement (4) jusqu'à l'équipement de façonnage (6).

6. Dispositif (1) selon la revendication précédente,
**caractérisé en ce que**
le troisième équipement de transport (25) présente un équipement d'entraînement (35) et cet équipement d'entraînement peut être commandé indépendamment en particulier de l'équipement d'entraînement du premier équipement de transport et/ou de l'équipement d'entraînement du deuxième équipement de transport.

7. Dispositif (1) selon au moins l'une des revendications précédentes, **caractérisé en ce que**
tous les équipements de transport (22, 24, 25, 26) peuvent être commandés indépendamment les uns des autres.

8. Procédé destiné à façonner des préformes en plastique (10) pour en faire des contenants en plastique (20), dans lequel les préformes en plastique sont transportées avec un dispositif de transport (2) le long d'un chemin de transport prédéfini, dans lequel ce dispositif de transport (2) présente une pluralité d'équipements de transport (22, 24, 25, 26) se raccordant de préférence les uns aux autres pour le transport des préformes en plastique, dans lequel un équipement de réchauffement (4) réchauffe les préformes en plastique (10) et un équipement de façonnage (6), lequel est agencé le long du chemin de transport des préformes en plastique (10) et après l'équipement de réchauffement (4), façonne les préformes en plastique (10) par sollicitation avec un milieu apte à l'écoulement pour en faire des contenants en plastique (20), dans lequel le dispositif (1) présente un premier équipement de transport (22), lequel amène les préformes en plastique (10) individuellement à l'équipement de réchauffement (4), dans lequel l'équipement de réchauffement (4) présente un deuxième équipement de transport (24), lequel transporte les préformes en plastique (10) pendant leur réchauffement,
**caractérisé en ce que**
le premier équipement de transport (22) présente un premier équipement d'entraînement (32) et le deuxième équipement de transport (24) présente un second équipement d'entraînement (34), et le premier équipement d'entraînement (32) et le second équipement d'entraînement (34) peuvent être commandés indépendamment l'un de l'autre au moins temporairement, dans lequel
le premier équipement de transport (22) peut être entraîné à une vitesse de transport modifiée, et en particulier ralentie, par rapport au deuxième équipement de transport (24) et le premier équipement de transport peut être arrêté lorsque le fonctionnement se poursuit avec le deuxième équipement de transport (24).
